# EUROPEAN PATENT SPECIFICATION

(11) **EP 4 578 770 B1**
(45) Date of publication and mention of the grant of the patent: **08.07.2026**
(21) Application number: 24171892.3
(22) Date of filing: 23.04.2024
(51) Int. Cl.: B62J 17/10, B62J 15/00, B62K 11/00, B62M 7/00, B62J 45/00

(54) **STRADDLED VEHICLE**
GRÄTSCHSITZFAHRZEUG
VÉHICULE À SELLE

(30) Priority: 26.12.2023 JP 2023219345
(43) Date of publication of application: 02.07.2025
(73) Proprietor: Yamaha Hatsudoki Kabushiki Kaisha, Iwata-shi, Shizuoka 438-8501 (JP)
(72) Inventor: Kikuchi, Yuta, Iwata-shi, Shizuoka, 4388501 (JP); Terada, Hirohisa, Iwata-shi, Shizuoka, 4388501 (JP)
(74) Representative: Grünecker Patent- und Rechtsanwälte PartG mbB

(56) References cited:
- EP-A1- 2 511 164
- EP-B1- 1 625 995
- EP-B1- 2 644 488
- EP-B1- 2 712 795
- US-A1- 2010 061 058
- US-A1- 2023 109 484

## Description

The present invention relates to a straddled vehicle according to the preamble of independent claim 1. Such a straddled vehicle can be taken from the prior art document EP 2 511 164 A1.

Some straddled vehicles have an electronic control unit disposed within a rear cover disposed above the rear wheel. For example, in the straddled vehicle disclosed in JP 2020-164111 A, a rear fender is disposed above the rear wheel. The rear fender includes a rear projection having an internal space. The straddled vehicle is equipped with an electronic control unit that controls an engine and a transmission device. The electronic control unit is disposed within the rear projection.

Since the electronic control unit generates heat, it is preferable that the electronic control unit is cooled by the running wind. However, when the electronic control unit is disposed within the rear cover, it is difficult to efficiently cool the electronic control unit due to the running wind. Further, when a ventilation hole is provided in the rear cover to cool the electronic control unit by the running wind while the vehicle is running, there is a concern that water or mud may enter the rear cover through the ventilation hole. In particular, since the rear cover is disposed close to the rear wheel, water or mud splashed up from the rear wheel tends to enter the rear cover through the ventilation hole.

It is an object of the present invention to provide a straddled vehicle that can efficiently cool an electronic control unit within a rear cover and can prevent water or mud from entering the rear cover.

According to the present invention said object is solved by a straddled vehicle having the features of independent claim 1. Preferred embodiments are laid down in the dependent claims.

A straddled vehicle according to one aspect of the present teaching includes a rear wheel, a rear cover, and an electronic control unit. The rear cover includes an internal space and a first ventilation hole communicating with the internal space. The rear cover is disposed above the rear wheel. The electronic control unit is disposed in the internal space of the rear cover. The first ventilation hole is disposed facing outward in a left-right direction of the vehicle.

In the straddled vehicle according to the present aspect, the first ventilation hole is provided in the rear cover. Therefore, the electronic control unit inside the rear cover is efficiently cooled by air flowing in and out through the first ventilation hole. Further, the first ventilation hole is disposed facing outward in the left-right direction of the vehicle. Therefore, water or mud splashed up from the rear wheel is less likely to enter through the first ventilation hole, compared to a case where the first ventilation hole is disposed facing downward. This prevents water or mud from entering the rear cover.

The first ventilation hole may be disposed below the electronic control unit as seen in a vehicle side view. At least a portion of the first ventilation hole may be disposed directly below the electronic control unit as seen in the vehicle side view. The first ventilation hole may be disposed outward of the electronic control unit in the left-right direction of the vehicle. Thereby, the electronic control unit inside the rear cover is efficiently cooled.

The rear cover may include an inner rear fender and a rear side cover. The inner rear fender may be disposed below the internal space and may be disposed facing the rear wheel. The rear side cover may be disposed on a lateral side of the internal space. The first ventilation hole may be provided in the inner rear fender.

The inner rear fender may include a curved surface and a first bulging portion. The curved surface may be curved convexly upward. The first bulging portion may bulge downward from the curved surface. The first ventilation hole may be provided in the first bulging portion. In this case, the first bulging portion allows the first ventilation hole to be easily provided so as to face outward in the left-right direction of the vehicle.

The inner rear fender may include a second bulging portion and a second ventilation hole. The second bulging portion may be disposed apart from the first bulging portion in the left-right direction of the vehicle. The second bulging portion may bulge downward from the curved surface. The second ventilation hole may be provided in the second bulging portion. The second ventilation hole may be disposed facing outward opposite to the first bulging portion in the left-right direction of the vehicle. In this case, the electronic control unit in the rear cover is efficiently cooled by air flowing in and out through the second ventilation hole. Furthermore, the second bulging portion allows the second ventilation hole to be easily provided so as to face outward in the left-right direction of the vehicle.

The first ventilation hole may be provided in the rear side cover. In this case, the intrusion of water or mud into the rear cover is further suppressed.

The rear cover includes a plurality of fins provided in the ventilation hole. In this case, the intrusion of water or mud into the rear cover is further suppressed.

The rear cover includes a baffle plate. The baffle plate is disposed inside the plurality of fins in the left-right direction of the vehicle. In this case, the intrusion of water or mud into the rear cover is further suppressed.

The opening area of the first ventilation hole as seen in the vehicle side view may be larger than the opening area of the first ventilation hole as seen in a vehicle rear view. In this case, the electronic control unit in the rear cover is efficiently cooled by increasing the amount of air flowing in and out between the lateral side of the rear cover and the internal space. Furthermore, water or mud splashed up from behind the first ventilation hole by the rear wheel is prevented from entering the rear cover.

### BRIEF DESCRIPTION OF THE DRAWINGS

FIG. 1 is a left side view of a straddled vehicle according to an embodiment.
FIG. 2 is a left side view of a rear cover.
FIG. 3 is a right side view of the rear cover.
FIG. 4 is a top view of the rear cover.
FIG. 5 is a bottom view of the rear cover.
FIG. 6 is a rear view of the rear cover.
FIG. 7 is a perspective view of the rear cover.
FIG. 8 is a perspective view of the rear cover.
FIG. 9 is a sectional view taken along line IX-IX in FIG. 4.
FIG. 10 is an enlarged top view of the rear cover.
FIG. 11 is a left side view of a rear cover according to a modified example.

### DETAILED DESCRIPTION

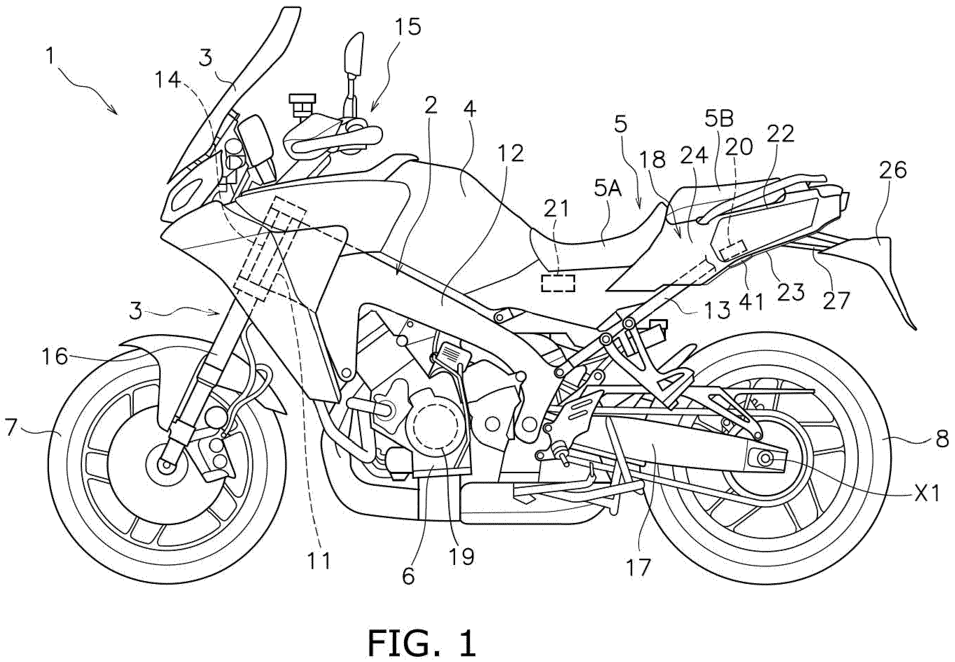

Hereinafter, a straddled vehicle according to an embodiment will be described with reference to the drawings. FIG. 1 is a left side view of a straddled vehicle 1 according to an embodiment. As shown in FIG. 1, the straddled vehicle 1 includes a vehicle body frame 2, a steering device 3, a fuel tank 4, a seat 5, a power unit 6, a front wheel 7, and a rear wheel 8. In the present embodiment, the front-rear, left-right, and up-down directions mean the front-rear, left-right, and up-down directions as seen from a rider seated on the seat 5.

The vehicle body frame 2 includes a head pipe 11, a main frame 12, and a rear frame 13. The main frame 12 is connected to the head pipe 11. The main frame 12 extends rearward from the head pipe 11. The rear frame 13 extends diagonally rearward and upward from the main frame 12.

The steering device 3 is rotatably supported by the head pipe 11. The steering device 3 rotatably supports the front wheel 7. The steering device 3 includes a steering shaft 14, a handle member 15, and a front fork 16. The steering shaft 14 is inserted into the head pipe 11. The handle member 15 is disposed above the head pipe 11. The handle member 15 extends in the left-right direction. The front fork 16 is connected to the steering shaft 14. The front fork 16 rotatably supports the front wheel 7.

The fuel tank 4 is disposed behind the head pipe 11. The fuel tank 4 is supported by the main frame 12. The seat 5 is disposed behind the fuel tank 4. The seat 5 includes a main seat 5A and a tandem seat 5B. The tandem seat 5B is disposed behind the main seat 5A.

The power unit 6 is disposed below the fuel tank 4. The power unit 6 is supported by the main frame 12. The power unit 6 includes, for example, an internal combustion engine. The rear wheel 8 is supported by the main frame 12 via a swing arm 17. The rear wheel 8 is rotatably supported by the swing arm 17. The swing arm 17 is supported by the main frame 12 so as to be able to swing up and down.

The straddled vehicle 1 includes a rear cover 18. The rear cover 18 covers a part of the rear frame 13. The rear cover 18 is disposed behind the main seat 5A. The rear cover 18 is disposed below the tandem seat 5B. The rear cover 18 is disposed above the rear wheel 8.

The straddled vehicle 1 includes a generator 19, an electronic control unit 20, and a battery 21. The generator 19 is attached to the power unit 6. The generator 19 is driven by the power unit 6 to generate electricity. The electronic control unit 20 controls power supplied from generator 19 to battery 21. The electronic control unit 20 includes, for example, an inverter, and rectifies the current from the generator 19. The electronic control unit 20 is disposed inside the rear cover 18.

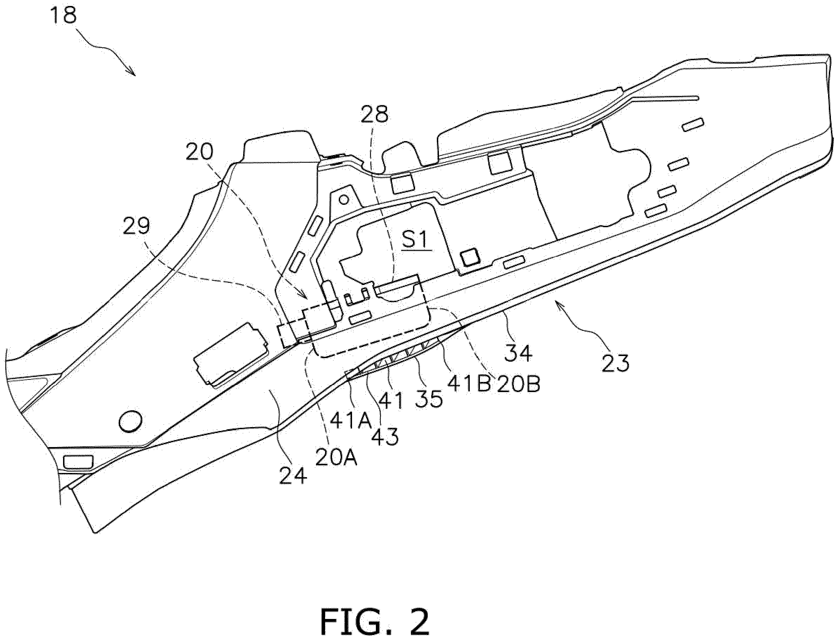

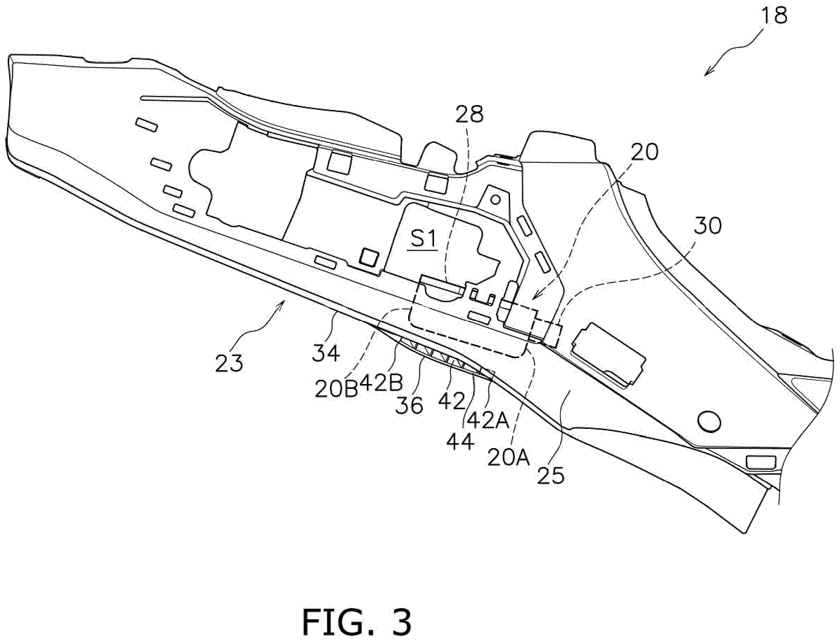

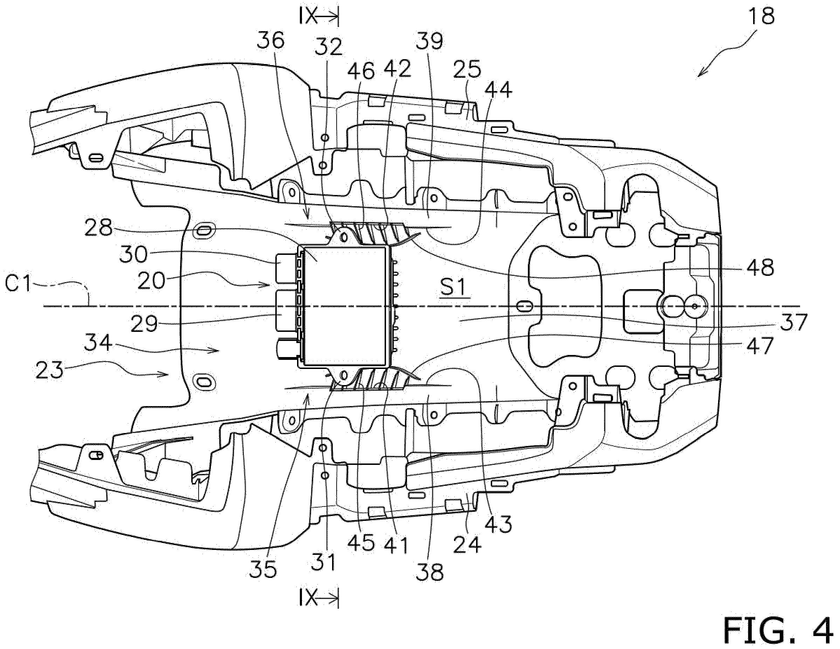

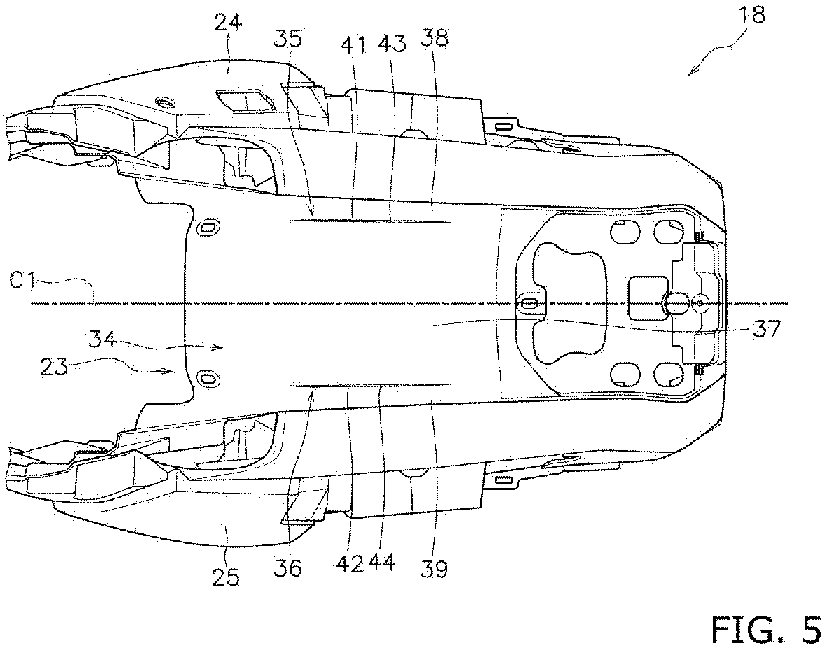

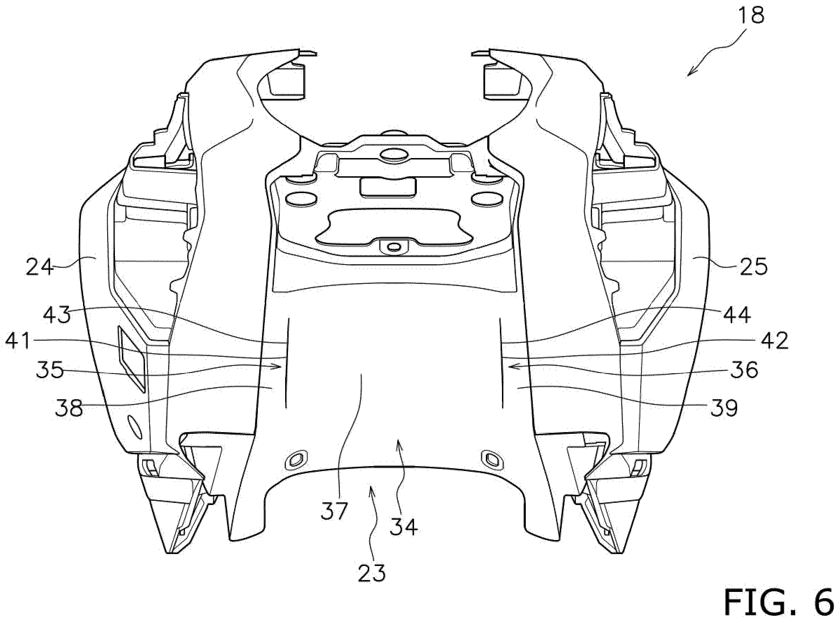

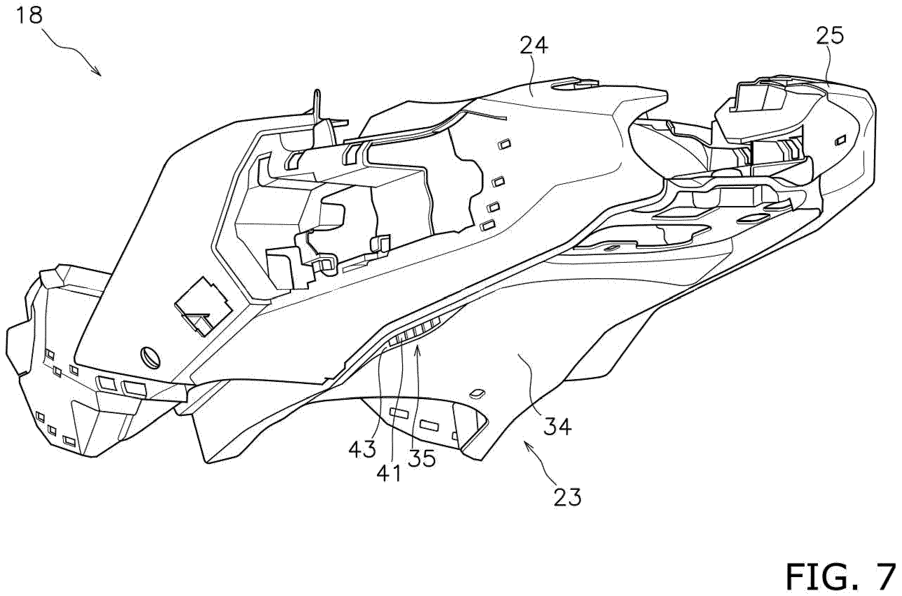

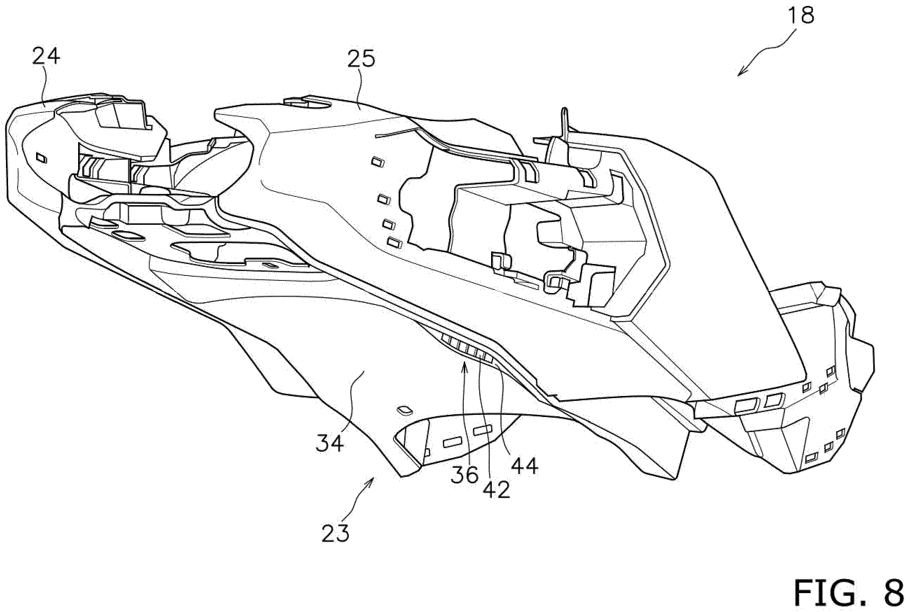

FIG. 2 is a left side view of the rear cover 18. FIG. 3 is a right side view of the rear cover 18. FIG. 4 is a top view of the rear cover 18. FIG. 5 is a bottom view of the rear cover 18. FIG. 6 is a rear view of the rear cover 18. FIGS. 7 and 8 are perspective views of the rear cover 18. Note that, as shown in FIG. 1, a side panel 22 is attached to the rear cover 18, but the side panel 22 is omitted in FIGS. 2 to 8.

As shown in FIGS. 2 and 4, the rear cover 18 includes an internal space S1. The electronic control unit 20 is disposed in the internal space S1 of the rear cover 18. The rear cover 18 includes an inner rear fender 23, a left rear side cover 24, and a right rear side cover 25. The inner rear fender 23 is disposed below the internal space S1. The inner rear fender 23 covers the internal space S1 from below. The left rear side cover 24 is disposed on the left side of the internal space S1. The left rear side cover 24 covers the internal space S1 from the left side. The right rear side cover 25 is disposed on the right side of the internal space S1. The right rear side cover 25 covers the internal space S1 from the right side.

As shown in FIG. 1, the inner rear fender 23 is disposed directly above the rear wheel 8. The inner rear fender 23 is disposed facing the rear wheel 8. An outer rear fender 26 is disposed behind the inner rear fender 23. The outer rear fender 26 is connected to the rear frame 13 via a stay 27.

The left rear side cover 24 extends upward from the inner rear fender 23. The left rear side cover 24 is disposed between the inner rear fender 23 and the tandem seat 5B in the vehicle vertical direction. The right rear side cover 25 is disposed apart from the left rear side cover 24 in the left-right direction of the vehicle. The right rear side cover 25 extends upward from the inner rear fender 23. Although not shown, similarly to the left rear side cover 24, the right rear side cover 25 is disposed between the inner rear fender 23 and the tandem seat 5B in the vehicle vertical direction.

The left rear side cover 24 covers the electronic control unit 20 from the left side. The right rear side cover 25 covers the electronic control unit 20 from the right side. The electronic control unit 20 is disposed between the left rear side cover 24 and the right rear side cover 25 in the vehicle left-right direction. As shown in FIG. 2, the left rear side cover 24 overlaps the electronic control unit 20 as seen in the vehicle side view. As shown in FIG. 3, the right rear side cover 25 overlaps the electronic control unit 20 as seen in the vehicle side view.

The inner rear fender 23 covers the electronic control unit 20 from below. The electronic control unit 20 is disposed above the inner rear fender 23. As shown in FIG. 4, the electronic control unit 20 overlaps the inner rear fender 23 as seen in the vehicle top view. The electronic control unit 20 includes a unit body 28 and connectors 29 and 30. The unit body 28 houses electronic components such as an inverter (not shown). The electronic control unit 20 includes mounting portions 31 and 32. The mounting portions 31 and 32 protrude from the unit body 28 in the left-right direction of the vehicle. The mounting portions 31 and 32 are attached to the rear frame 13 via a stay (not shown).

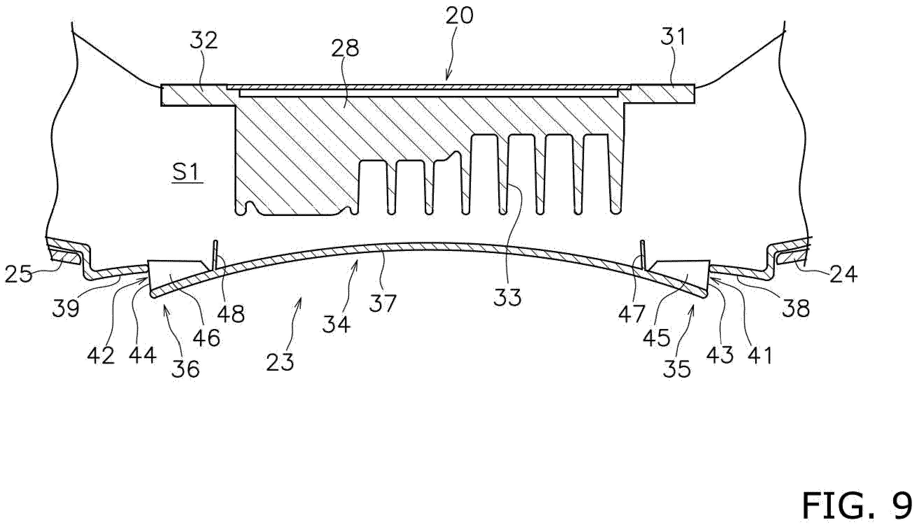

The connectors 29 and 30 are connected to the unit body 28. The connectors 29 and 30 protrude forward from the unit body 28. A cable extending from the above-described generator 19 and a cable extending from the battery 21 are connected to the connectors 29 and 30. FIG. 9 is a sectional view taken along line IX-IX in FIG. 4. As shown in FIG. 9, the electronic control unit 20 includes a plurality of heat radiation fins 33. The heat radiation fins 33 extend downward from the unit body 28. Note that, in FIG. 9, only one of the plurality of heat radiation fins 33 is designated by the reference numeral 33, and the reference numerals of the other heat radiation fins 33 are omitted.

As shown in FIGS. 2 to 9, the inner rear fender 23 includes a curved surface 34, a first bulging portion 35, and a second bulging portion 36. As shown in FIG. 9, the curved surface 34 has an upwardly curved shape. The curved surface 34 has a cross-sectional shape convexly curved upward as seen in the vehicle front view. The curved surface 34 is curved downward laterally outward from the center in the left-right direction of the vehicle.

As shown in FIGS. 4 and 5, the curved surface 34 includes a center portion 37, a left side portion 38, and a right side portion 39. The center portion 37 is disposed on the vehicle center line C1 extending in the front-rear direction of the vehicle. The center portion 37 is disposed between the left side portion 38 and the right side portion 39 in the left-right direction of the vehicle. The electronic control unit 20 is disposed directly above the center portion 37. The electronic control unit 20 is disposed facing the center portion 37.

The first bulging portion 35 and the second bulging portion 36 are disposed apart from each other in the left-right direction of the vehicle. The first bulging portion 35 and the second bulging portion 36 each bulge downward from the curved surface 34. As shown in FIG. 2, the first bulging portion 35 has a shape that bulges downward as seen in the vehicle side view. As shown in FIG. 3, the second bulging portion 36 has a shape that bulges downward as seen in the vehicle side view.

The first bulging portion 35 is disposed between the center portion 37 and the left side portion 38. The first bulging portion 35 projects downward from the left side portion 38. The second bulging portion 36 is disposed between the center portion 37 and the right side portion 39. The second bulging portion 36 projects downward from the right side portion 39.

The inner rear fender 23 includes a first ventilation hole 41 and a second ventilation hole 42. The first ventilation hole 41 and the second ventilation hole 42 communicate with the internal space S1. The first ventilation hole 41 and the second ventilation hole 42 extend from the outside of the rear cover 18 to the internal space S1 of the rear cover 18 through the inner rear fender 23. The second ventilation hole 42 is disposed laterally symmetrically with the first ventilation hole 41. However, the second ventilation hole 42 may be disposed laterally asymmetrically with respect to the first ventilation hole 41. As shown in FIG. 1, at least a portion of the first ventilation hole 41 is located forward of the rotation axis X1 of the rear wheel 8. Although not shown, similarly to the first ventilation hole 41, at least a portion of the second ventilation hole 42 is located forward of the rotation axis X1 of the rear wheel 8.

As shown in FIGS. 2 to 9, the first ventilation hole 41 and the second ventilation hole 42 are disposed facing outward in the left-right direction of the vehicle. The first ventilation hole 41 is disposed facing leftward. The second ventilation hole 42 is disposed facing rightward. The opening area of the first ventilation hole 41 as seen in the vehicle side view shown in FIG. 2 is larger than the opening area of the first ventilation hole 41 as seen in the vehicle rear view shown in FIG. 6. The opening area of the second ventilation hole 42 as seen in the vehicle side view shown in FIG. 3 is larger than the opening area of the second ventilation hole 42 as seen in the vehicle rear view shown in FIG. 6.

The first ventilation hole 41 is provided in the first bulging portion 35. The first bulging portion 35 includes a first step portion 43. The first step portion 43 projects downward from the left side portion 38. The first ventilation hole 41 is provided in the first step portion 43. The second ventilation hole 42 is provided in the second bulging portion 36. The second bulging portion 36 includes a second step portion 44. The second step portion 44 projects downward from the right side portion 39. The second ventilation hole 42 is provided in the second step portion 44.

As shown in FIG. 2, the first ventilation hole 41 is disposed below the electronic control unit 20 as seen in the vehicle side view. At least a portion of the first ventilation hole 41 is disposed directly below the electronic control unit 20 as seen in the vehicle side view. The front end 41A of the first ventilation hole 41 is located rearward of the front surface 20A of the electronic control unit 20 as seen in the vehicle side view. The rear end 41B of the first ventilation hole 41 is located rearward of the rear surface 20B of the electronic control unit 20 as seen in the vehicle side view.

As shown in FIG. 3, the second ventilation hole 42 is disposed below the electronic control unit 20 as seen in the vehicle side view. At least a portion of the second ventilation hole 42 is disposed directly below the electronic control unit 20 as seen in the vehicle side view. The front end 42A of the second ventilation hole 42 is located rearward of the front surface 20A of the electronic control unit 20 as seen in the vehicle side view. The rear end 42B of the second ventilation hole 42 is located rearward of the rear surface 20B of the electronic control unit 20 as seen in the vehicle side view.

As shown in FIG. 4, the first ventilation hole 41 and the second ventilation hole 42 are disposed outward of the electronic control unit 20 in the left-right direction of the vehicle. The first ventilation hole 41 is disposed leftward of the electronic control unit 20 in the left-right direction of the vehicle. The second ventilation hole 42 is disposed rightward of the electronic control unit 20 in the left-right direction of the vehicle.

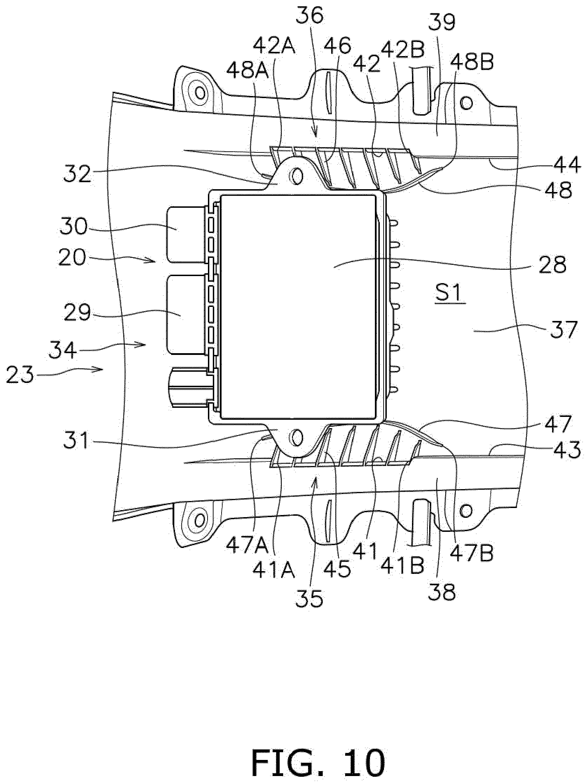

FIG. 10 is an enlarged top view of the rear cover 18. As shown in FIG. 10, the rear cover 18 includes a plurality of first fins 45 and a plurality of second fins 46. Note that in the drawings, only one of the plurality of first fins 45 is designated by the reference numeral 45, and the reference numerals of the other first fins 45 are omitted. Further, in the drawings, only one of the plurality of second fins 46 is designated by the reference numeral 46, and the reference numerals of the other second fins 46 are omitted.

The plurality of first fins 45 and the plurality of second fins 46 protrude upward from the upper surface of the inner rear fender 23. The plurality of first fins 45 are disposed at intervals in the front-rear direction of the vehicle. The plurality of first fins 45 are provided in the first ventilation hole 41. The plurality of first fins 45 extend inward from the first ventilation hole 41 in the left-right direction of the vehicle. The plurality of first fins 45 are inclined forward and outward in the left-right direction of the vehicle.

The plurality of second fins 46 are disposed at intervals in the front-rear direction of the vehicle. The plurality of second fins 46 are provided in the second ventilation hole 42. The plurality of second fins 46 extend inward from the second ventilation hole 42 in the left-right direction of the vehicle. The plurality of second fins 46 are inclined forward and outward in the left-right direction of the vehicle.

The rear cover 18 includes a first baffle plate 47 and a second baffle plate 48. The first baffle plate 47 and the second baffle plate 48 protrude upward from the upper surface of the inner rear fender 23. The first baffle plate 47 is disposed inside the plurality of first fins 45 in the left-right direction of the vehicle. The first baffle plate 47 is disposed to face the plurality of first fins 45 in the left-right direction of the vehicle. The front end 47A of the first baffle plate 47 is located forward of the front end 41A of the first ventilation hole 41. The rear end 47B of the first baffle plate 47 is located rearward of the rear end 41B of the first ventilation hole 41. The first baffle plate 47 has a shape that is curved inward in the left-right direction of the vehicle as seen in the vehicle top view.

The second baffle plate 48 is disposed inside the plurality of second fins 46 in the left-right direction of the vehicle. The second baffle plate 48 is disposed to face the plurality of second fins 46 in the left-right direction of the vehicle. A front end 48A of the second baffle plate 48 is located forward of a front end 42A of the second ventilation hole 42. The rear end 48B of the second baffle plate 48 is located rearward of the rear end 42B of the second ventilation hole 42. The second baffle plate 48 has a shape that is curved inward in the left-right direction of the vehicle as seen in the vehicle top view.

In the straddled vehicle 1 according to the present embodiment described above, the first ventilation hole 41 is provided in the rear cover 18. Therefore, the electronic control unit 20 inside the rear cover 18 is efficiently cooled by air flowing in and out through the first ventilation hole 41. Further, the first ventilation hole 41 is disposed facing outward in the left-right direction of the vehicle. Therefore, water or mud splashed up from the rear wheel 8 is less likely to enter through the first ventilation hole 41 than when the first ventilation hole 41 is disposed facing downward. This prevents water or mud from entering the rear cover 18.

The straddled vehicle 1 of the above embodiment is a so-called street motorcycle. Alternatively, the straddled vehicle 1 may be an off-road motorcycle, a scooter, an underbone, or a moped.

The electronic control unit 20 is controlling the current from the generator 19. Alternatively, the electronic control unit 20 may control an engine or an electric motor. The structure of the rear cover 18 is indicated in the above embodiment. Alternatively, the first ventilation hole 41 and the second ventilation hole 42 may be disposed in the left and right directions opposite to those in the above embodiment. The arrangement or shape of the first ventilation hole 41 and the second ventilation hole 42 as indicated in the above embodiment may be changed.

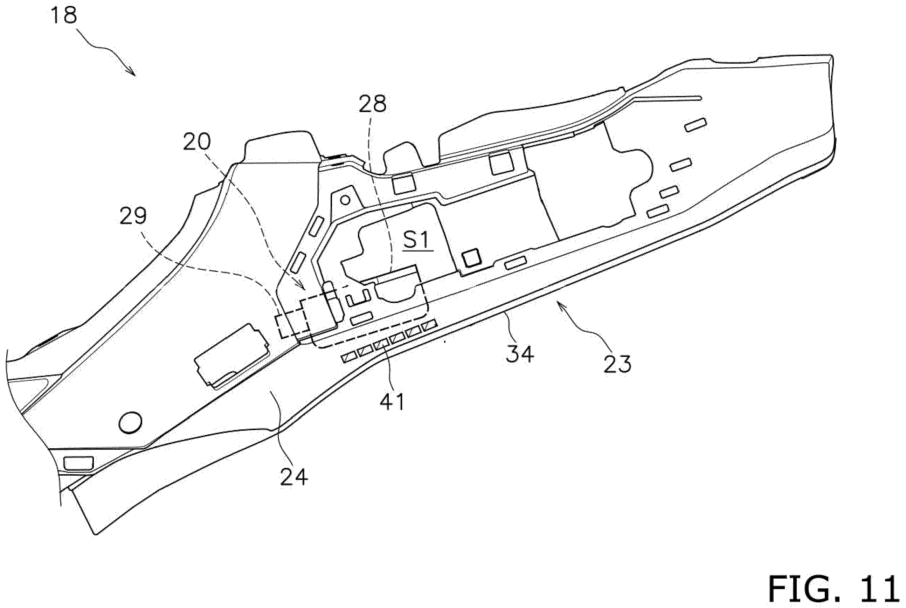

FIG. 11 is a left side view of the rear cover 18 according to a modified example. As shown in FIG. 11, the first ventilation hole 41 may be provided in the left rear side cover 24. Although not shown in the drawings, the second ventilation hole 42 may be provided in the right rear side cover 25.

### REFERENCE SIGNS LIST

8: Rear wheel, 18: Rear cover, 20: Electronic control unit, 23: Inner rear fender, 24: Left rear side cover, 34: Curved surface, 35: First bulging portion, 36: Second bulging portion, 41: First ventilation hole, 42: Second ventilation hole, 45: First fin, 47: First baffle plate, S1: Internal space

## Claims

1. A straddled vehicle (1) comprising:
a rear wheel (8);
a rear cover (18) including an intemal space (S1) and a first ventilation hole (41) that communicates with the internal space (S1), the rear cover (18) being disposed above the rear wheel (8) with regard to an up-down direction of the vehicle; and
an electronic control unit (20) disposed in the intemal space (S1) of the rear cover (18), wherein
the first ventilation hole (41) is disposed such that an opening area of the first ventilation hole (41) is facing outward in left-right direction of the vehicle,
**characterized in that** the rear cover (18) includes a plurality of fins (45) provided in the first ventilation hole (41), wherein
the rear cover (18) includes a baffle plate (47) disposed inside the plurality of fins (45) in the left-right direction of the vehicle.

2. The straddled vehicle (1) according to claim 1, **characterized in that** the first ventilation hole (41) is disposed below the electronic control unit (20) with regard to the up-down direction of the vehicle as seen in vehicle side view.

3. The straddled vehicle (1) according to claim 1, **characterized in that** at least a portion of the first ventilation hole (41) is disposed directly under the electronic control unit (20) with regard to a front-rear direction of the vehicle as seen in vehicle side view.

4. The straddled vehicle (1) according to at least one of the claims 1 to 3, **characterized in that** the first ventilation hole (41) is disposed outward of the electronic control unit (20) in the left-right direction of the vehicle as seen in vehicle top view.

5. The straddled vehicle (1) according to at least one of the claims 1 to 4, **characterized in that** the rear cover (18) includes
an inner rear fender (23) disposed below the internal space (S1) with regard to the up-down direction of the vehicle and facing the rear wheel (8), and
at lest one rear side cover (24, 25) disposed on a lateral side of the internal space (S1), and
the first ventilation hole (41) is provided in the inner rear fender (23).

6. The straddled vehicle (1) according to claim 5, **characterized in that** the inner rear fender (23) is disposed under the internal space (S1) with regard to the front-rear direction of the vehicle as seen in vehicle side view and is at least partly overlapping with the rear wheel (8) seen in vehicle top view.

7. The straddled vehicle (1) according to claim 5 or 6, **characterized in that** the inner rear fender (23) includes
a curved surface (34) convexly curved upward with regard to the up-down direction of the vehicle, and
a first bulging portion (35) bulging downward from the curved surface (34) with regard to the up-down direction of the vehicle, and
the first ventilation hole (41) is provided in the first bulging portion (35).

8. The straddled vehicle (1) according to claim 6, **characterized in that** the inner rear fender (23) includes
a second bulging portion (36) disposed apart from the first bulging portion (35) in the left-right direction of the vehicle and bulging downward from the curved surface (34) with regard to the up-down direction of the vehicle, and
a second ventilation hole (42) provided in the second bulging portion (36) and disposed such that an opening area of the second ventilation hole (41) is facing outward disposed such that an opening area of the first ventilation hole (41) is facing outward opposite to the opening area of the first ventilation hole (41) in the first bulging portion (35) in the left-right direction of the vehicle.

9. The straddled vehicle (1) according to claim 1, **characterized in that** the rear cover (18) includes
an inner rear fender (23) disposed below the internal space (S1) with regard to the up-down direction of the vehicle and facing the rear wheel (8),
at lest one rear side cover (24, 25) disposed on a lateral side of the internal space (S1), and
the first ventilation hole (41) is provided in the rear side cover (24, 25).

10. The straddled vehicle (1) according to at least one of the claims 1 to 9, **characterized in that** an opening area of the first ventilation hole (41) as seen in vehicle side view is larger than an opening area of the first ventilation hole (41) as seen in vehicle rear view.

## Patentansprüche

1. Ein Spreizsitzfahrzeug (1), das umfasst:
ein Hinterrad (8);
eine hintere Abdeckung (18), die einen Innenraum (S1) enthält und eine erste Belüftungsöffnung (41) enthält, die mit dem Innenraum (S1) in Verbindung steht, wobei die hintere Abdeckung (18) in der Fahrzeug-Auf-Ab-Richtung über dem Hinterrad (8) angeordnet ist; und
eine elektronische Steuereinheit (20), die im Innenraum (S1) der hinteren Abdeckung (18) angeordnet ist, wobei
die erste Belüftungsöffnung (41) so positioniert ist, dass eine Öffnungsfläche der ersten Belüftungsöffnung (41) in der Links-Rechts-Richtung des Fahrzeugs nach außen zeigt, **dadurch gekennzeichnet, dass** die hintere Abdeckung (18) eine Mehrzahl von Lamellen (45) enthält, die in der ersten Belüftungsöffnung (41) vorgesehen sind, wobei
die hintere Abdeckung (18) ein Leitblech (47) enthält, das in der Links-Rechts-Richtung des Fahrzeugs innerhalb der Mehrzahl von Lamellen (45) angeordnet ist.

2. Das Spreizsitzfahrzeug (1) gemäß Anspruch 1, **dadurch gekennzeichnet, dass** die erste Belüftungsöffnung (41) unterhalb der elektronischen Steuereinheit (20) in Bezug auf die Fahrzeug-Auf-Ab-Richtung, gesehen in einer Seitenansicht des Fahrzeugs, angeordnet ist.

3. Das Spreizsitzfahrzeug (1) gemäß Anspruch 1, **dadurch gekennzeichnet, dass** zumindest ein Abschnitt der ersten Belüftungsöffnung (41) direkt unterhalb der elektronischen Steuereinheit (20) in Bezug auf die Vorder-Rück-Richtung des Fahrzeugs, von der Seite betrachtet, angeordnet ist.

4. Das Spreizsitzfahrzeug (1) gemäß zumindest einem der Ansprüche 1 bis 3, **dadurch gekennzeichnet, dass** die erste Belüftungsöffnung (41) außerhalb der elektronischen Steuereinheit (20) in der Links-Rechts-Richtung des Fahrzeugs, aus der Draufsicht auf das Fahrzeug betrachtet, angeordnet ist.

5. Das Spreizsitzfahrzeug (1) gemäß zumindest einem der Ansprüche 1 bis 4, **dadurch gekennzeichnet, dass** die hintere Abdeckung (18) enthält:
einen inneren hinteren Kotflügel (23), der unterhalb des Innenraums (S1) in vertikaler Richtung des Fahrzeugs angeordnet ist und dem Hinterrad (8) zugewandt ist, und
zumindest eine hintere Seitenabdeckung (24, 25), an einer seitlichen Seite des Innenraums (S1) angeordnet, und
die erste Belüftungsöffnung (41) im inneren hinteren Kotflügel (23) vorgesehen ist.

6. Das Spreizsitzfahrzeug (1) gemäß Anspruch 5, **dadurch gekennzeichnet, dass** der innere hintere Kotflügel (23) unterhalb des Innenraums (S1) in Bezug auf die Fahrzeug-Vorder-Rück-Richtung, wie in einer Seitenansicht des Fahrzeugs gesehen, angeordnet ist und das Hinterrad (8), wie in einer Draufsicht des Fahrzeugs gesehen, zumindest teilweise überlappt.

7. Das Spreizsitzfahrzeug (1) gemäß Anspruch 5 oder 6, **dadurch gekennzeichnet, dass** der innere hintere Kotflügel (23) enthält
eine gekrümmte Fläche (34), die in Bezug auf die vertikale Richtung des Fahrzeugs konvex nach oben gekrümmt ist, und
einen ersten Ausbuchtungsabschnitt (35), der in Bezug auf die vertikale Richtung des Fahrzeugs von der gekrümmten Fläche (34) nach unten ausbaucht, und
die erste Belüftungsöffnung (41) in dem ersten Ausbuchtungsabschnitt (35) vorgesehen ist.

8. Das Spreizsitzfahrzeug (1) gemäß Anspruch 6, **dadurch gekennzeichnet, dass** der innere hintere Kotflügel (23) enthält
einen zweiten Ausbuchtungsabschnitt (36), der in der Links-Rechts-Richtung des Fahrzeugs vom ersten Ausbuchtungsabschnitt (35) beabstandet ist und in Bezug auf die Fahrzeug-Auf-Ab-Richtung von der gekrümmten Fläche (34) nach unten ausbaucht, und
eine zweite Belüftungsöffnung (42), die in dem zweiten Ausbuchtungsabschnitt (36) vorgesehen ist und so angeordnet ist, dass die Öffnungsfläche der zweiten Belüftungsöffnung (42) in einer Richtung zu dem Bereich ausgerichtet ist, der der Öffnungsfläche der ersten Belüftungsöffnung (41) in dem ersten Ausbuchtungsabschnitt (35) in der Links-Rechts-Richtung des Fahrzeugs entgegengesetzt ist.

9. Das Spreizsitzfahrzeug (1) gemäß Anspruch 1, **dadurch gekennzeichnet, dass** die hintere Abdeckung (18) enthält
einen inneren hinteren Kotflügel (23), der in vertikaler Richtung des Fahrzeugs unterhalb des Innenraums (S1) angeordnet ist und dem Hinterrad (8) zugewandt ist, zumindest eine hintere Seitenabdeckung (24, 25), die an einer Seitenfläche des Innenraums (S1) angeordnet ist, und
die erste Belüftungsöffnung (41) in der hinteren Seitenabdeckung (24, 25) vorgesehen ist.

10. Das Spreizsitzfahrzeug (1) gemäß zumindest einem der Ansprüche 1 bis 9, **dadurch gekennzeichnet, dass** die Öffnungsfläche der ersten Belüftungsöffnung (41) von der Seite des Fahrzeugs aus gesehen größer ist als die Öffnungsfläche der ersten Belüftungsöffnung (41) von der Rückseite des Fahrzeugs aus gesehen.

## Revendications

1. Véhicule à selle (1) comprenant :
une roue arrière (8) ;
un capot arrière (18) incluant un espace interne (S1) et un premier trou de ventilation (41) qui communique avec l'espace interne (S1), le capot arrière (18) étant disposé au-dessus de la roue arrière (8) par rapport à une direction haut-bas du véhicule ; et
une unité de commande électronique (20) disposée dans l'espace interne (S1) du capot arrière (18), dans lequel
le premier trou de ventilation (41) est disposé de sorte qu'une zone d'ouverture du premier trou de ventilation (41) soit orientée vers l'extérieur dans une direction gauche-droite du véhicule,
**caractérisé en ce que** le capot arrière (18) inclut une pluralité de nervures (45) disposée dans le premier trou de ventilation (41), dans lequel
le capot arrière (18) inclut une plaque de déflexion (47) disposée au sein de la pluralité de nervures (45) dans la direction gauche-droite du véhicule.

2. Le véhicule à selle (1) selon la revendication 1, **caractérisé en ce que** le premier trou de ventilation (41) est disposé au-dessous de l'unité de commande électronique (20) par rapport à la direction haut-bas du véhicule tel que visualisé dans une vue latérale de véhicule.

3. Le véhicule à selle (1) selon la revendication 1, **caractérisé en ce que** au moins une partie du premier trou de ventilation (41) est disposée directement sous de l'unité de commande électronique (20) par rapport à une direction avant-arrière du véhicule tel que visualisé dans une vue latérale de véhicule.

4. Le véhicule à selle (1) selon au moins une des revendications 1 à 3, **caractérisé en ce que** le premier trou de ventilation (41) est disposé vers l'extérieur de l'unité de commande électronique (20) dans la direction gauche-droite du véhicule tel que visualisé dans une vue de dessus de véhicule.

5. Le véhicule à selle (1) selon au moins une des revendications 1 à 4 **caractérisé en ce que** le capot arrière (18) inclut
un garde-boue arrière interne (23) disposé au-dessous de l'espace interne (S1) par rapport à la direction haut-bas du véhicule et orienté vers la roue arrière (8), et
au moins un capot latéral arrière (24, 25) disposé sur un côté latéral de l'espace interne (S1), et
le premier trou de ventilation (41) est disposé dans le garde-boue arrière interne (23).

6. Le véhicule à selle (1) selon la revendication 5, **caractérisé en ce que** le garde-boue arrière interne (23) est disposé sous l'espace interne (S1) par rapport à la direction avant-arrière du véhicule tel que visualisé dans une vue latérale de véhicule, et chevauche au moins partiellement la roue arrière (8) visualisée dans une vue de dessus de véhicule.

7. Le véhicule à selle (1) selon la revendication 5 ou 6, **caractérisé en ce que** le garde-boue arrière interne (23) inclut
une surface incurvée (34) incurvée de manière convexe vers le haut par rapport à la direction haut-bas du véhicule, et
une première partie de renflement (35) présentant un renflement vers le bas depuis la surface incurvée (34) par rapport à la direction haut-bas du véhicule, et
le premier trou de ventilation (41) est disposé dans la partie de renflement (35).

8. Le véhicule à selle (1) selon la revendication 6, **caractérisé en ce que** le garde-boue arrière interne (23) inclut
une deuxième partie de renflement (36) disposée séparée de la première partie de renflement (35) dans la direction gauche-droite du véhicule, et présentant un renflement vers le bas depuis la surface incurvée (34) par rapport à la direction haut-bas du véhicule, et
un deuxième trou de ventilation (42) disposé dans la deuxième partie de renflement (36) et disposé de sorte qu'une zone d'ouverture du deuxième trou de ventilation (41) soit orientée vers l'extérieur, disposé de sorte qu'une zone d'ouverture du premier trou de ventilation (41) soit orientée vers l'extérieur face à la zone d'ouverture du premier trou de ventilation (41) dans la première partie de renflement (35) dans la direction gauche-droite du véhicule.

9. Le véhicule à selle (1) selon la revendication 1, **caractérisé en ce que** le capot arrière (18) inclut
un garde-boue arrière interne (23) disposé au-dessous de l'espace interne (S1) par rapport à la direction haut-bas du véhicule et orienté vers la roue arrière (8),
au moins un capot latéral arrière (24, 25) disposé sur un côté latéral de l'espace interne (S1), et
le premier trou de ventilation (41) est disposé dans le capot latéral arrière (25).

10. Le véhicule à selle (1) selon au moins une des revendications 1 à 9, **caractérisé en ce que** une zone d'ouverture du premier trou de ventilation (41) tel que visualisé dans une vue latérale de véhicule est plus grande qu'une zone d'ouverture du premier trou de ventilation (41) tel que visualisé dans une vue arrière de véhicule.
